(19) Europäisches Patentamt
European Patent Office
Office européen des brevets

(11) **EP 2 455 733 A1**

(12) **EUROPÄISCHE PATENTANMELDUNG**

(43) Veröffentlichungstag:
**23.05.2012 Patentblatt 2012/21**

(51) Int Cl.:
***G01J 3/433*** *(2006.01)*

(21) Anmeldenummer: **10014737.0**

(22) Anmeldetag: **18.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Leister Process Technologies**
**6056 Kägiswil (CH)**

(72) Erfinder:
• **Willing, Bert**
**1807 Blonay (CH)**

• **Gaillard, Mathieu**
**1004 Lausanne (CH)**
• **Wittmann, Andreas**
**6074 Giswil (CH)**

(74) Vertreter: **Klocke, Peter**
**ABACUS Patentanwälte**
**Klocke Späth Barth**
**Zürichstrasse 34**
**8134 Adliswil/Zürich (CH)**

(54) **Verfahren und Messanordnung zur Wellenlängenmodulationsspektroskopie**

(57) Verfahren zur Reduzierung von Selfmixing-Effekten bei der Wellenlängenmodulationsspektroskopie, vorzugsweise zur Anwendung bei der Gasdetektion, und Messanordnung zur Durchführung des entsprechenden Verfahrens, wobei von einer Laserlichtquelle (2) ausgehendes Laserlicht in zwei Teilstrahlen (3, 4) als Analyse- und Referenzlaserstrahl verwendet wird. Nach dem Durchleiten des Analyselaserstrahls (3) durch ein Messvolumen (5) mit zu analysierendem Gas (6) und des Referenzlaserstrahls (4) durch beispielsweise Luft werden diese von einem Analysemessdetektor (7) bzw. einem Referenzmessdetektor (9) erfasst. Zur Bestimmung der Gaskonzentration in dem Messvolumen (5) erfolgt insbesondere die Differenzbildung der nf-Ausgangssignale, vorzugsweise der 2f-Ausgangssignale der Messdetektoren (7, 9). Vor der Differenzbildung wird zunächst noch eine Signalstärken- und/oder Phasenanpassung der Ausgangssignale durchgeführt.

Fig. 1

Printed by Jouve, 75001 PARIS (FR)

**Beschreibung**

Die Erfindung betrifft ein Verfahren und eine Messanordnung zur Reduzierung des Effektes von Selfmixing bei der Wellenlängenmodulationsspektroskopie, vorzugsweise zur Anwendung bei der Gasdetektion.

Bei der Wellenlängenmodulationsspektroskopie (WMS) wird die Wellenlänge und üblicherweise auch die Intensität des Lichtes einer abstimmbaren Lichtquelle, gewöhnlich eines kontinuierlich abstimmbaren Lasers, beispielsweise eines Diodenlasers mit einer Frequenz f moduliert, wobei die Wellenlänge über ein mögliches Absorptionsspektrum einer zu analysierenden Probe variiert wird. Das Laserlicht wird von der Gasprobe absorbiert, wenn die Wellenlänge des Lichtes über eine Resonanzfrequenz des Gases variiert wird. Dies führt zu einer Intensitätsmodulation der gemessenen Leistung auf dem Detektor. Die Wechselwirkung beruht auf dem Absorptionsvermögen der Gasprobe. Trifft das Laserlicht nach dem Passieren der Gasprobe auf einen Messdetektor, zum Beispiel auf eine Fotodiode, so umfasst das Ausgangssignal des Messdetektors Wechselspannungskomponenten bei der Modulationsfrequenz f und bei den überlagerten höheren Oberwellenfrequenzen nf, wobei n eine natürliche positive Zahl ist. Die Demodulation des Ausgangssignals des Messdetektors bei einer Oberwellenfrequenz nf verschiebt die Messung von dem Gleichspannungslevel (dc), bei denen die Laserlichtquelle systembedingt ein großes Rauschen aufweist, zu einem höheren Frequenzband (nf), bei der das Rauschen geringer ist, wodurch die Messempfindlichkeit des Systems verbessert werden kann.

Aus der Druckschrift US 6,040,914 ist ein Verfahren und ein System zur Wellenlängenspektroskopie bekannt, bei dem ein Teil des Laserlichtes einer abstimmbaren Laserlichtquelle durch eine Gasprobe zu einem Messdetektor geschickt wird, wobei ein anderer Teil des Laserlichtes direkt auf einen Monitordetektor einfällt, der einen Referenzmessdetektor zu dem Analysemessdetektor bildet. Die Wellenlänge des Laserlichtes der Laserquelle wird mit einer Frequenz von f moduliert und periodisch über eine entsprechende molekulare Absorptionslinie in der Gasprobe bewegt. Die Ausgangssignale des Analysemessdetektors und des Referenzmessdetektors werden von einer nachfolgenden elektronischen Ausgleichsschaltung aufbereitet, die den Rauschpegel des Ausgangssignals des Analysemessdetektors reduziert. Dabei werden das Analysemesssignal des Analysemessdetektors und das Referenzmesssignal des Referenzmessdetektors in der Ausgleichsschaltung durch Autobalancing über den Gleichspannungsanteil aneinander angeglichen und dann voneinander subtrahiert. Als Ergebnis erhält man ein Signal, das nur die Abweichungen des Ausgangssignals des Analysemessdetektors von dem Ausgangssignal des Referenzmessdetektors zeigt. Das so erhaltene Ergebnissignal ist frei von identischen Störungen, die sowohl den Analyselaserstrahl wie auch den Referenzlaserstrahl gleichermaßen beeinflussen. Das rauschreduzierte Ergebnissignal wird dann noch bei der doppelten Frequenz 2f demoduliert. Bei der Auswertung der Messsignale des Analyse- und des Referenzmessdetektors werden insbesondere die vollständigen Messsignale inklusive der frequenzabhängigen Anteile voneinander abgezogen. Die Berücksichtigung der frequenzabhängigen Anteile ist durch die Bandbreite der elektronischen Auswerteschaltung limitiert, zudem erfolgt die Signalaufbereitung und die Signalauswertung des Analyse- und des Referenzmessdetektors mittels analoger Schaltungen. Des Weiteren stehen bei diesem Verfahren für eine weitere Auswertung die Messwerte der beiden Detektoren in der ursprünglichen Form nicht weiter zu Verfügung, sondern nur die verarbeiteten Signale nach der Autobalancing-Schaltung. Die Möglichkeiten zur weiteren Signalauswertung sind damit stark eingeschränkt. Zusätzlich funktioniert diese Methode nur, wenn der Analyselaserstrahl und der Referenzlaserstrahl in Phase sind, was typischerweise der Fall ist, wenn die Strahlen vom gleichen Auskoppelspiegel der Laserquelle stammen. Falls aber beispielsweise der Analyse- und Referenzlaserstrahl von der gegenüberliegenden Facette eines Diodenlasers stammen, sind diese nicht zwingend in Phase und die beschriebene Methode funktioniert nicht. Sie kann unter Umständen sogar das Rauschen zusätzlich erhöhen.

Das bekannte Verfahren zielt darauf ab, das Rauschen der Laserlichtquelle und der verwendeten Detektoren zu verringern, ohne den Gigahertzbereich zu verwenden, da zuverlässige elektronische Schaltungen im Gigahertzbereich deutlich aufwändiger sind. Bei dem mit der verwendeten elektronischen Ausgleichsschaltung reduzierbaren bzw. eliminierbaren Rauschen handelt es sich um ein Rauschen der Intensität des Laserlichtstromes im Zeit-Bereich, vor allem um Quantenrauschen und um Rauschen der gesamten Elektronik.

Ausgehend von dem vorstehend beschriebenen Stand der Technik liegt der Erfindung die Aufgabe zu Grunde die Auswirkungen, des durch Reflektionen entlang des Strahlengangs des Laserstrahls bedingte Selfmixing einer Laserlichtquelle im Analysesignal zu eliminieren.

Diese Aufgabe wird erfindungsgemäß durch ein Verfahren mit den Merkmalen des Anspruchs 1 sowie durch eine Messanordnung mit den Merkmalen des nebengeordneten Patentanspruchs 15 gelöst. Weitere vorteilhafte Ausgestaltungen sind den rückbezogenen Ansprüchen zu entnehmen.

Beim Selfmixing koppelt reflektiertes Laserlicht in die Laserkavität ein und beeinflusst den Laservorgang entsprechend der Phasenbeziehung zwischen dem Laserlicht in der Laserkavität und von außerhalb in die Laserkavität rückreflektiertem Laserlicht. Da diese Phasenbeziehung wellenlängenabhängig und abstandsabhängig ist, tritt eine störende Modulation der Laserleistung mit Temperaturausdehnung bzw. beim Verstimmen der Wellenlänge auf. Messtechnisch sind Selfmixing und Etalons nicht voneinander zu trennen, da sie sich einzig in der Abhängigkeit von der Laserleistung unterscheiden. Der Selfmixing-Effekt benötigt keine Mehrfachreflektionen zwischen parallelen optischen Grenzflächen (Etalon-Effekt), sondern tritt bereits bei einmaliger Reflektion und Rückkopplung in die Laserlichtquelle auf. Aus diesem Grund ist optisches Rauschen durch Selfmixing durch konstruktive Maßnahmen sehr schwierig zu unterdrücken, da diffuse Rückstreuungen an Grenzflächen nie vollständig vermieden werden können. Die Änderung bzw. Modulation der Laserlichtintensität durch das Selfmixing führt dazu, dass die normalerweise glatte Laserkennlinie, dargestellt als optische Ausgangsleistung über dem Laserstrom, eine ausgeprägte Modulation aufweist, die das demodulierte Signal sehr stark beeinflusst.

Im der folgenden Beschreibung wird die Erfindung für ein Signal $S_{2f}(x)$ bei 2f (n=2) beschrieben, gilt aber analog auch für höhere harmonische Frequenzen 3f, 4f, ... nf, oder auch f selbst. Der Parameter x stellt die veränderliche Grösse in der Modulation dar, also typischerweise der Laserstrom oder eine damit verbundene Grösse wie z.B. die Wellenlänge.

Bei dem erfindungsgemäßen Verfahren zur Reduzierung von Selfmixing-Effekten eines Laserstrahls bei der Wellenlängenmodulationsspektroskopie erfolgt die Eliminierung der Selfmixing-Effekte gemäß dem folgenden Ablauf:

- Erzeugen von mit der Frequenz f moduliertem Laserlicht in zwei Laserstrahlen identischer Wellenlänge, wobei das Laserlicht von einer gemeinsamen Laserlichtquelle ausgesendet wird;

- Hindurchleiten eines Laserstrahls als Analyselaserstrahl durch das zu analysierende Gas oder Gasgemisch, welches das Laserlicht des Analyselaserstrahls in Abhängigkeit von seiner Wellenlänge zumindest teilweise absorbiert;

- Hindurchleiten des anderen Laserstrahls als Referenzlaserstrahl durch ein bekanntes Gas oder Gasgemisch oder Vakuum, das das Laserlicht des Referenzlaserstrahls nicht absorbiert;

- Erfassen des Analyselaserstrahls mit einem Analysemessdetektor und des Referenzlaserstrahls mit einem Referenzmessdetektor nach dem Durchtritt durch das jeweilige Gas bzw. Gasgemisch;

- Demodulieren des Analysemessdetektorsignals S(t) und des Referenzmessdetektorsignals R(t) bei der Frequenz nf und anpassen der Signale aneinander, wobei n eine positive ganze Zahl ist; und

- Eliminieren des durch Selfmixing-Effekte bedingten Rauschens des demodulierten Analysemessdetektorsignals durch Differenzbildung der demodulierten aneinander angepassten Ausgangssignale des Analysemessdetektors und des Referenzmessdetektors, wobei bei der Differenzbildung das nf-Signal des Analysemessdetektors $S_{nf}(x)$ und des Referenzmessdetektors $R_{nf}(x)$ verwendet wird, und wobei die demodulierten Signale vorzugsweise durch Normalisierung mit dem Gleichanteil $S_{dc}$ und $R_{dc}$ der Signale aneinander angepasst sind.

Das bekannte Gas oder Gasgemisch, das für das Laserlicht des Referenzlaserstrahls im Absorptionswellenlängenbereich des zu analysierenden Gases oder Gasgemisches nicht absorbierend ist, muss nicht speziell ausgewählt sein. Es kann sich dabei beispielsweise um ein vorgesehenes Schutzgas, Vakuum oder um Luft handeln, mit einem Druck der gleich oder auch deutlich geringer ist als der Atmosphärendruck. Bei der Gasdetektion durch Wellenlängenmodulation wird das Ausgangssignal des Analysedetektors S(t) und des Referenzmessdetektors R(t) auf beispielsweise der ersten harmonischen 2f der Modulationsfrequenz f des Laserlichtes gemessen. Mathematisch entspricht dies der zweiten Ableitung (Krümmung) der Laserkennlinien, bei der die Ausgangsleistung der Laserlichtquelle über den Laserstrom aufgetragen ist. Bei einer Geraden als Laserkennlinie ist das Messsignal ohne absorbierendes Gas Null. Sobald Gas ein Teil der Intensität bei einer bestimmten Wellenlänge absorbiert, zeigt eine direkte Absorptionsmessung einen Einbruch der Laserkennlinie bei dem entsprechendem Laserstrom bzw. der entsprechenden Wellenlänge. Das 2f-Signal $S_{2f}(x)$ entspricht dabei der Krümmung der Laserkennlinie an der Spitze des Gasabsorptionspeaks. Je grösser die Konzentration des Gases desto grösser wird der Einbruch und die Krümmung der Laserkennlinie und damit auch die Amplitude des 2f-Signals $S_{2f}(x)$.

Da das 2f-Signal $S_{2f}(x)$ noch von der Grundleistung $S_0$ der Laserdiode abhängt, sollte es noch durch diese geteilt werden, um diesen Rauschterm zu reduzieren respektive zu eliminieren.

$$S_{2f,norm}(x) = S_{2f}(x) / S_0$$

Dazu kann beispielsweise der zeitlich gemittelte Wert $S_0 = \langle S(t) \rangle$, vor einem bei der Messung genutzten Lock-in-Verstärker verwendet werden, der Gleichanteil nach dem Lock-in-Verstärker bei einem bestimmten Wert $x_i$ des Modulationsparameter $S_0 = S_{dc}(x_i)$, oder der Gleichteil gemittelt über den Modulationsparameter $S_0 = \langle S_{dc}(x) \rangle_x$. Vorzugsweise wird durch den Gleichteil beim Modulationsparameter $x_i$ mit maximalem 2f-Signal normiert, da dies eine bessere Linearisierung der Kalibrationskennlinie für höhere Konzentration ergibt, wie nachstehend ausgeführt.

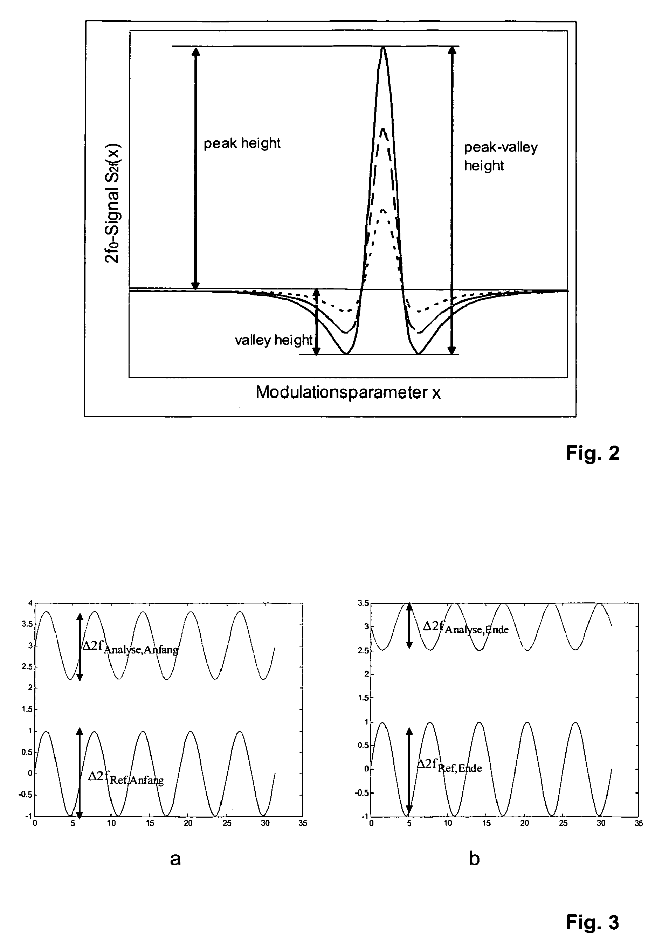

Um die Gaskonzentration aus dem normierten 2f-Signal $S_{2f,norm}(x)$ zu ermitteln, muss die Amplitude des $S_{2f}(x)$ charakterisiert werden, wozu z.B. das Maximum, das Minimum oder die Distanz Maximum und Minimum gewählt werden. Dies ist schematisch in Figur 2 dargestellt. Bei Verwendung des Maximum des 2f-Signals $S_{2f}(x)$ kann die Gas-Konzentration C dargestellt werden als

$$C = A \cdot \max\left(S_{2f,norm}(x)\right) + B$$

oder bei Verwendung der Distanz von Minimum zu Maximum folgt für die GasKonzentration

$$C = A' \cdot \left[\max\left(S_{2f,norm}(x)\right) - \min\left(S_{2f,norm}(x)\right)\right] + B'$$

wobei A (A') und B (B') Kalibrierungsparameter darstellen sowie die Funktionen min(..) und max(..) den Maximal- und den Minimalwert der Funktion bedeuten. Die Kalibrierungsfaktoren werden einmal durch Messung bestimmt und bleiben dann fix bis zu einer potentiellen Re-Kalibrierung.

Die Modulation der Kennlinie durch Selfmixing bedeutet nun, dass das 2f-Signal $S_{2f}(x)$ des Messdetektors einen Offset aufweist. Dieser Offset ist nicht reproduzierbar, da die verschiedenen Temperaturen der entsprechenden Bauteile nie genau bekannt sind, wobei der Offset ein Vielfaches des eigentlichen 2f-Absorptionssignals betragen kann.

Bei der vorliegenden Erfindung wird die Problemstellung so gelöst, dass die vom Laser ausgehende Intensität mit dem Referenzmessdetektor gemessen wird. Dieser Referenzmessdetektor empfängt ein Teil des Laserlichtes der Laserlichtquelle, das die zur eigentlichen Messung erforderliche Wechselwirkung, zum Beispiel eine Absorption durch das zu analysierende Gas oder Gasgemisch, nicht erfahren hat. Da das Selfmixing eine Intensitätsmodulation des Laserstrahls verursacht, sind davon der Analyse- und der Referenzlaserstrahl gleichermaßen betroffen. Diese Modulation wird somit sowohl von dem Referenzmessdetektor wie auch von dem Analysemessdetektor erfasst. Die Ausgangssignale der beiden Detektoren werden auf der Frequenz 2f gemessen, wobei das 2f-Signal $R_{2f}(x)$ des Referenzmessdetektors dem durch Selfmixing verursachten Offset bei dem 2f-Signal $S_{2f}(x)$ des Analysemessdetektors entspricht. Das Erfassen des Offsets durch den Referenzmessdetektor ermöglicht somit die Eliminierung des optischen Rauschens, das durch Selfmixing-Effekte verursacht wird. Gegenüber dem Stand der Technik erfolgt die Signalaufbereitung und Signalauswertung der Messsignale des Analyse- und des Referenzmessdetektors vollständig in digitaler Form. Dabei bleiben die Ausgangssignale der beiden Detektoren unverändert bestehen und können so auf verschiedene Arten weiter verarbeitet, normiert und ausgewertet werden.

Die beiden für das erfindungsgemäße Verfahren benötigten Laserstrahlen identischer Wellenlänge und identischer Modulation mit der Frequenz f müssen von einer gemeinsamen Laserlichtquelle ausgehen. Dabei kann Laserlicht aus ein und derselben Laserfacette oder aus zwei verschiedenen Laserfacetten der Laserlichtquelle verwendet werden. Bei nur einer gemeinsamen Laserfacette ist es erforderlich, aus dem einen aus der Laserkavität austretenden Laserstrahl zwei Teilstrahlen als Analyse- und als Referenzlaserstrahl, beispielsweise durch Strahlteilung, zu erzeugen. Bei zwei ausgebildeten Laserfacetten (z.B. DFB-Laserdioden) entfällt diese Maßnahme, da die beiden aus der Laserkavität austretenden Laserstrahlen direkt als Analyse- und Referenzlaserstrahl verwendet werden können.

Bei bevorzugten Ausführungsformen der Erfindung kann als Analyselaserstrahl der Primärstrahl und als Referenzlaserstrahl der Sekundärstrahl einer Laserlichtquelle verwendet werden, die aus sich gegenüber liegenden Laseraperturen der Laserkavität austreten oder der Analyselaserstrahl und der Referenzlaserstrahl durch Teilung des von der Laserlichtquelle ausgehenden Laserstrahls gewonnen werden. Alternativ kann der Analyselaserstrahl von dem von der Laserlichtquelle ausgehenden Laserstrahl gebildet werden und für den Referenzlaserstrahl Streulicht des Laserstrahls verwendet werden. Als einfache Laserlichtquelle für die Wellenlängenmodulationsspektroskopie kann beispielsweise eine DFB-Laserdiode als Laserlichtquelle verwendet werden, wobei der auf der vorderen Seite der Laserdiode austretende Strahl als Analyselaserstrahl zur Detektierung des zu analysierenden Gases oder Gasgemisches verwendet und der an der Rückseite austretende Strahl als Referenzlaserstrahl auf den Referenzmessdetektor geleitet wird.

Bei einer vorteilhaften Variante des erfindungsgemäßen Verfahrens zu der Eliminierung von durch Selfmixing-Effekte bedingten Rauschens wird für die Differenzbildung der jeweiligen 2f-Signale $S_{2f}(x)$ und $R_{2f}(x)$ des Analysemessdetektors und des Referenzmessdetektors eine Signalstärkenanpassung des Analysemessdetektorsignals und des Referenzmessdetektorsignals aneinander durchgeführt. Für die 2f-Signalstärkenanpassung wird vorzugsweise das Verhältnis der jeweils zeitlich gemittelten Signale oder der Gleichanteil ($S_0$, $R_0$) dieser Signale nach der Demodulation verwendet werden, wie vorstehend bereits beschrieben. Darüber hinaus kann das Ausgangssignal des Referenzmessdetektors dazu genutzt werden, die Intensität des Laserstrahls zu bestimmen. Eine Ermittlung der Laserintensität aus dem Ausgangssignal des Analysemessdetektors kann damit entfallen.

Falls der Analyselaserstrahl und der Referenzlaserstrahl von der gleichen Facette der Laserquelle stammen, sind diese beiden in Phase. Das Selfmixing kann dann kompensiert werden, indem die beiden Signale aneinander angepasst werden, vorzugsweise durch die Gleichanteile (dc), und das 2f-Signal des Referenzmessdetektors vom 2f-Signal des Analysemessdetektors abgezogen werden. Das Selfmixing kompensierte Signal (SM) wird erfindungsgemäß nach einer der beiden nachfolgenden Formeln berechnet:

$$S_{2f,SM,norm}(x) = S_{2f,norm}(x) - R_{2f,norm}(x) = \frac{S_{2f}(x)}{S_0} - \frac{R_{2f}(x)}{R_0}$$

$$S'_{2f,SM,norm}(x) = \frac{S_{2f}(x) - b \cdot R_{2f}(x)}{R_0} \quad \text{mit} \quad b = \frac{S_0}{R_0}$$

Dabei unterscheidet sich die zweite Formel um einen konstanten Faktor b von der ersten, was in den Kalibrationsparametern A, A' und B, B' berücksichtigt werden muss.

Falls für den Referenzlaserstrahl der Sekundärstrahl von der anderen Laserauskopplung als für den Analyselaserstrahl verwendet wird, funktioniert das oben beschriebene Verfahren nicht, da die beiden Strahlen typischerweise nicht mehr in Phase sind. Die Nutzung des Sekundärstrahls bedingt eine Phasenanpassung, d. h. die Signale müssen vor der Differenzbildung erst um die Phase korrigiert werden. Ansonsten erhält das vom Selfmixing kompensierte Signal unter Umständen mehr Rauschen als ohne Selfmixing Kompensation. Studien von Selfmixing Interferenz zeigen, dass die Phasenbeziehung von der Laserverstärkung abhängig ist. Für schwache Verstärkung, z. B. in HeNe-Lasern, ist die Phasenbeziehung zwischen emittiertem Licht auf der Vorder- und Rückseite immer gleich. Wohingegen bei Halbleiterlasern, z. B. in einem Diodenlaser, die Phase um 180° gedreht wird, wenn die Verstärkung im Laser eine bestimmte Schwelle übersteigt [E. *M. Randone et al., Opt. Express 14*, 9788, *2006*]. Dieses Phänomen ist unabhängig von der Stärke des Feedbacks durch Selfmixing. Im Falle, dass einer Phasendifferenz von 180° zwischen Primär- und Sekundärstrahl besteht, müssen für das Selfmixing kompensierte 2f-Signal die folgenden modifizierten Formeln angewandt werden:

$$S_{2f,SM,norm}(x) = S_{2f,norm}(x) + R_{2f,norm}(x) = \frac{S_{2f}(x)}{S_0} + \frac{R_{2f}(x)}{R_0}$$

$$S'_{2f,SM,norm}(x) = \frac{S_{2f}(x) + b \cdot R_{2f}(x)}{R_0} \quad \text{mit} \quad b = \frac{S_0}{R_0}$$

Treten Nichtlinearitäten und Phasensprünge über den Modulationsbereich auf, sollten diese Störungen des 2f Signals $S_{2f}(x)$ durch eine weitere Verfeinerung der obenstehenden Methode reduziert werden. Nichtlinearitäten, zum Beispiel bei der Verwendung von unterschiedlichen oder nominell gleichen Detektortypen, Lock-In-Verstärkern oder elektronischer Bauelemente, wie z. B. Transimpedanzverstärker, können zu ungenügender Selfmixing-Kompensation führen. Des Weiteren ist das Verhältnis der Ausgangsleistungen der Front- und Rückfacette (Front-to-Back ratio) nicht konstant über den Modulationsbereich, da Selfmixing die Verstärkung im Laser und damit das Front-to-Back ratio ändern kann. Ferner ist es möglich, dass ein Phasensprung innerhalb des Scanbereichs auftreten kann. Dies ist bei der Auswahl des Messbereiches oder im Kompensations-Mechanismus zu berücksichtigen. Aus diesem Grund ist es sinnvoll, einen variablen Parameter a(x) einzuführen, der die Anpassung der 2f-Signale nicht über den ganzen Modulationsbereich gleich behandelt, sondern dieser in Funktion des Modulationsparameter x ausführt.

Die Amplituden- und Phasenanpassung soll am Anfang und Ende des Abtastbereichs ausserhalb der Absorptionslinie des Gas gemessen und bestimmt werden und eventuelle Differenzen der Anpassung am Anfang und Ende durch eine Funktion a(x), zum Beispiel durch einen linearen Fit, zwischen diesen Werten für den gesamten Abtastbereich anpassen. Ein Phasensprung kann auf diese Weise auch kompensiert werden, da die Information des Phasensprungs im Amplitudenverhältnis enthalten ist. Der Abtastbereich sollte zu diesem Zweck einen genügend grossen Bereich auf beiden Seiten der Resonanz besitzen, um die Signale ohne Wechselwirkung mit dem Gas vergleichen zu können. Dies ist schematisch in der Figur 3 der beigefügten Zeichnung visualisiert.

Die Signale sind zu Anfang des Abtastbereiches in Phase und am Ende des Abtastbereiches um 180° phasenverschoben dargestellt. Es ist zudem ersichtlich, dass sich sowohl die Phase als auch das Amplitudenverhältnis ändert. Dieser Effekt kann kompensiert werden, indem der Modulationsindex m, der die relative Änderung des Signals bezüglich des Gleichanteils angibt, für den Analysestrahl nach der Formel

$$m_S(x) = \frac{S_{2f}(x)}{S_0}$$

und für den Referenzstrahl nach der Formel

$$m_R(x) = \frac{R_{2f}(x)}{R_0}$$

berechnet wird.

Sind die beiden Verhältnisse $m_S(x)$ und $m_R(x)$ über den ganzen Abtastbereich x bekannt, kann direkt das Verhältnis dieser Signale

$$a(x) = m_S(x)/m_R(x)$$

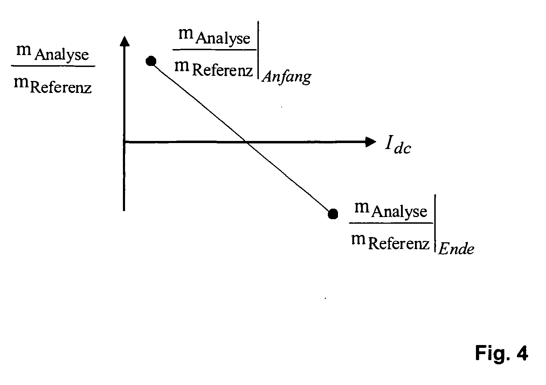

für die 2f-Signalanpassung verwendet werden. Können sie nur am Anfang und am Ende des Abtastbereiches, in welchem sich keine Wechselwirkung mit der Gasresonanz ergibt, ermittelt werden, muss die Funktion a(x) zwischen dem Anfangs- und Endbereich durch eine geeignete Funktion a(x) interpoliert werden, z.B. durch einen linearen Fit mittels einer Ausgleichsgeraden. Die Verhältnisse der relativen 2f-Signalamplituden von Analyse- und Referenzsignal am Anfang und am Ende des Abtastbereiches werden in der Figur 4 der Zeichnung versinnbildlicht.

Dreht sich die Phase des Laserlichtes innerhalb des Abtastbereiches um 180°, so hat dies ein negatives Verhältnis der aneinander angepassten Signalamplituden des Analyse- und des Referenzmessdetektors zur Folge. Durch einen beispielsweise linearen Fit zwischen den beiden gemessenen Kurven ist es möglich, ein Modulationsindex-Verhältnis in Abhängigkeit z.B. von dem Laserstrom zu bestimmen, welches zur Selfmixing-Kompensation verwendet werden kann.

Das Selfmixing kompensierte 2f-Signal kann mit folgenden Formeln berechnet werden:

$$S_{2f.SM.norm}(x) = \frac{S_{2f}(x)}{S_0} - a(x) \cdot \frac{R_{2f}(x)}{R_0}$$

$$S'_{2f,SM,norm}(x) = \frac{S_{2f}(x) + b \cdot a(x) \cdot R_{2f}(x)}{R_0} \quad \text{mit} \quad b = \frac{S_0}{R_0}$$

Das erfindungsgemäße Verfahren zur Reduzierung von Selfmixing-Effekten eines Laserstrahls lässt sich in Verbindung mit allen Arten von bekannten Lasern, beispielsweise DFBs, VCSELs, Festkörper-, Faser- und Gaslasern anwenden. Zudem ist es möglich, das erfindungsgemäße Verfahren auch in anderen optischen Messsystemen als bei der Wellenlängenmodulationsspektroskopie in der Gasdetektion anzuwenden. Die Erfindung ist somit nicht auf die Gassensorik beschränkt.

Die erfindungsgemäße Messanordnung zur Wellenlängenmodulationsspektroskopie, beispielsweise zur Anwendung bei der Gasdetektion, weist eine abstimmbare Laserlichtquelle zur Erzeugung von moduliertem Laserlicht in zwei Laserstrahlen (Analyselaserstrahl und Referenzlaserstrahl) und einen Analysemessdetektor zur Erfassung des Analyselaserstrahls sowie einen Referenzmessdetektor zur Erfassung des Referenzlaserstrahls auf. Des weiteren weist die vorgeschlagene Messanordnung eine Steuer- und Auswerteeinheit auf, mit der zum Einen die Laserlichtquelle gesteuert und zum anderen das Analysemessdetektorsignal und das Referenzmessdetektorsignal aufgenommen und ausgewertet werden können, wobei vor der Erfassung der Analyselaserstrahl ein Messvolumen mit einem zu analysierenden Gas oder Gasgemisch und der Referenzlaserstrahl ein bekanntes Gas oder Gasgemisch passiert. Die erfindungsgemäße Messanordnung ist dadurch gekennzeichnet, dass mit ihr das vorstehend beschriebene erfindungsgemäße Verfahren durchführbar ist. Die abstimmbare und damit einstellbare Laserlichtquelle ist vorzugsweise ein Halbleiterdiodenlaser, der entweder durch Verwendung von Ruhestrom oder Betriebstemperatur eingestellt werden kann.

Außer den vorstehend genannten Komponenten umfasst die Messanordnung mindestens noch ein Modulationsmittel zum Modulieren der Wellenlänge der Laserlichtquelle mit einer Frequenz f, ein erstes Demodulationsmittel zum Demodulieren des Ausgangssignals des Analysemessdetektors bei einer höheren Oberschwingung nf der Frequenz f, ein zweites Demodulationsmittel zum Demodulieren des Ausgangssignals des Referenzmessdetektors bei der Oberschwingung nf. Außerdem sind noch Integriermittel zum Integrieren des demodulierten Referenzmessdetektorsignals und Differenziermittel zum Differenzieren des demodulierten Ausgangssignals des Analyse- und/oder des Referenzmessdetektors vorgesehen. Die Modulations-, Demodulations-, Integrations- und Differenziermittel sind Teil einer elektronischen Steuer- und Auswerteeinheit der Messanordnung, die zusätzlich noch Mittel zur Differenzbildung der demodulierten Ausgangssignale der beiden Messdetektoren aufweist, sowie Speicher- und/oder Anzeigemittel zur Speicherung bzw. Visualisierung des von der Auswerteeinheit ermittelten Ergebnisses. Als Analyse- bzw. Referenzmessdetektor sind vorzugsweise Fotodioden zur Erfassung des Analyse- bzw. Referenzlaserstrahls vorgesehen. Weiterhin weist die Steuer- und Auswerteeinheit noch Signalstärkenanpassungsmittel sowie Mittel zur Stromversorgung und Stromregelung der Laserlichtquelle auf. Für die vorstehend genannten Mittel werden dem Fachmann bekannte elektrische bzw. elektronische Schaltungsanordnungen eingesetzt.

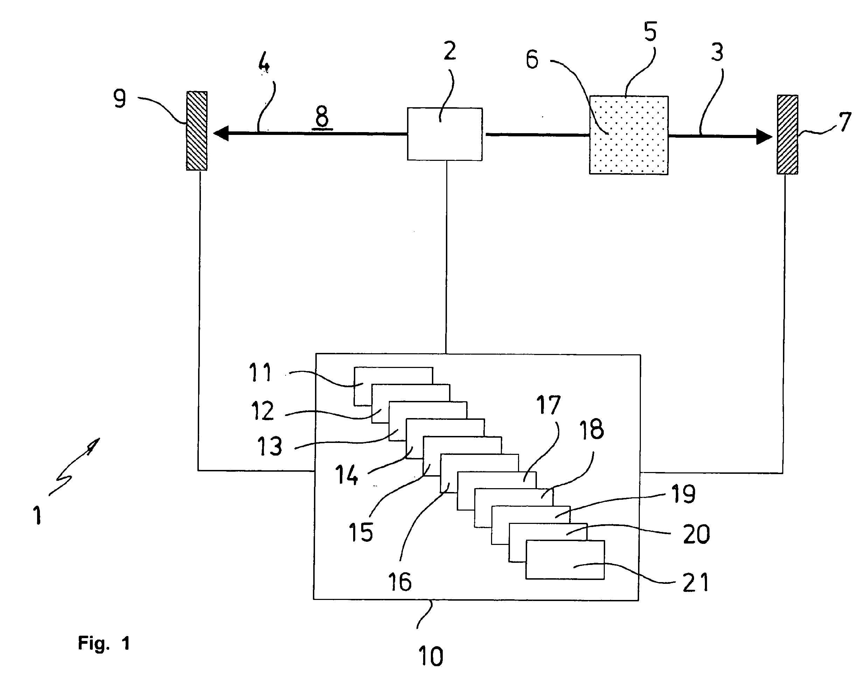

Nachfolgend wird die Erfindung anhand eines in der Zeichnung dargestellten Ausführungsbeispiels näher erläutert. Weitere Merkmale der Erfindung können sich aus der folgenden Beschreibung des Ausführungsbeispiels der Erfindung in Verbindung mit den Ansprüchen und der beigefügten Zeichnung ergeben. Die einzelnen Merkmale der Erfindung können für sich allein oder zu mehreren bei unterschiedlichen Ausführungsformen der Erfindung verwirklicht sein. Die Figuren 1 bis 4 der Zeichnung zeigen in schematischer Darstellung:

Figur 1    eine erfindungsgemäße Messanordnung zur Wellenlängenmodulationsspektroskopie, vorzugsweise zur Anwendung bei der Gasdetektion;

Figur 2    ein Beispiel eines idealen 2f-Signals der Messanordnung gemäß Figur 1;

Figur 3    das 2f-Signal aus Figur 2, welches die Signale von dem Analyse- und dem Referenzsignal am Anfang (Figur 3a) und am Ende (Figur 3b) des Abtastbereiches, aufgetragen über den Abtastbereich; und

Figur 4    die Verhältnisse der relativen 2f-Amplituden von Analyse- und Referenzsignal am Anfang und am Ende des Abtastbereiches gemäß Figur 3, aufgetragen über dem Laserstrom

Die in der Figur dargestellte erfindungsgemäße Messanordnung 1 weist als Laserlichtquelle 2 eine abstimmbare DFB-Laserdiode auf. Aus der Laserdiode 2 tritt an einer Seite ein Analyselaserstrahl 3 und an der gegenüber liegenden Seite ein Referenzlaserstrahl 4 aus. Der Analyselaserstrahl 3 wird durch ein Messvolumen 5, die das zu analysierende Gas 6 enthält, hindurch auf einen Analysemessdetektor 7 (Fotodiode) geleitet. Der Referenzlaserstrahl 4 passiert ein bekanntes Gas oder Gasgemisch 8, in diesem Fall Luft, bevor er auf einen Referenzmessdetektor 9 trifft.

Die abstimmbare modulierbare Laserlichtquelle 2, der Analysemessdetektor 7 und der Referenzmessdetektor 9 sind mit einer elektronischen Steuer- und Auswerteeinheit 10 verbunden. Die Steuer- und Auswerteeinheit 10 weist Stromversorgungs- und Stromregelungsmittel 11 für die Laserlichtquelle 2 sowie Temperaturregelungsmittel 12 für eine in der Zeichnung nicht dargestellte Temperiereinrichtung der Laserlichtquelle 2 auf. Des Weiteren umfasst die Auswerteeinheit 10 noch Modulationsmittel 13 zur Modulation des Laserlichtes der Laserlichtquelle 2 mit einer Frequenz f, Demodulationsmittel 14 und 15 zur Demodulation des Ausgangssignals des Analysemessdetektors 7 und des Referenzmessdetektors 9, die eine Demodulation bei einer höheren Oberschwingung nf der Frequenz f ermöglichen. Außerdem sind noch Integriermittel 16 und Differenziermittel 17 vorgesehen, mit denen das demodulierte Ausgangssignal zeitlich gemittelt oder zeitlich abgeleitet werden kann. Zusätzlich sind noch Signalstärkenanpassungsmittel 18 sowie Differenzbildungsmittel 19 in die Steuerund Auswerteeinheit 10 integriert, mit der das durch Selfmixing-Effekte verursachte Rauschen des Ausgangssignals des Analysemessdetektors 7 während der Auswertung eliminiert werden kann. Das derart bereinigte Messergebnis kann in einem Speichermittel 20 der Einheit 10 abgelegt oder mittels Anzeigemittel 21 der Einheit 10 visualisiert werden.

Die Figur 2 zeigt ein typisches 2f-Signal $S_{2f}(x)$, aufgenommen mit der in der Figur 1 dargestellten Messanordnung. Aus dem dargestellten idealen 2f-Signal $S_{2f}(x)$ kann aus der Amplitude des Signals die Gaskonzentration ermittelt werden, wobei der Wert des Maximus (peak-height), des Minimas (valley-height) oder von Maximum bis Minimum (peak-valley-height) verwendet werden kann. Die Berechnung der Gaskonzentration erfolgt erfindungsgemäß mittels den im allgemeinen Teil der Erfindungsbeschreibung offenbarten Formeln unter Nutzung der erfindungsgemäßen Messanordnung.

Die Figur 3 zeigt die erfindungsgemäßen Messanordnung bei der Wellenlängenmodulationsspektroskopie aufgenommenen Signale des Analyse- und des Referenzmessdetektors. Das Analyse- und dem Referenzmessdetektorsignal ist in der Figur 3a am Anfang und in der Figur 3b am Ende des Abtastbereiches gezeigt In der schematischen Darstellung ist beispielhaft das 2f-Signal des Analysedetektors (jeweils oben) und des Referenzdetektors (jeweils unten) dargestellt. Es ist zu erkennen, dass die Signale zu Anfang des Abtastbereiches in Phase und am Ende des Abtastbereiches um 180° phasenverschoben sind.

Die Figur 4 zeigt die Verhältnisse der 2f-Signalamplituden des Analyse- und Referenzmessdetektorsignals schematisch am Anfang und am Ende des Abtastbereiches, wobei zwischen dem Anfang und dem Ende des Abtastbereiches die errechneten Verhältniswerte nicht dargestellt sind. Dabei ist das relative Amplitudenverhältnis hier über dem Laserstrom aufgetragen. Die die dargestellten Verhältniswerte am Anfang und am Ende des Abtastbereiches verbindende Gerade interpoliert die in dieser Figur nicht dargestellten tatsächlichen Verhältniswerte durch einen linearen Fit, d. h. eine Ausgleichsgerade. Aus der schematischen Darstellung ist für den Fachmann ersichtlich, dass unterschiedliche Modulationsindex-Verhältnisse vorhanden sind, und dass sich insbesondere die Phase innerhalb des Abtastbereiches um 180°gedreht hat. Dabei bedeutet ein negatives Verhältnis eine Phasenänderung um 180°.

## Patentansprüche

1. Verfahren zur Reduzierung von Selfmixing-Effekten bei der Wellenlängenmodulationsspektroskopie, vorzugsweise zur Anwendung bei der Gasdetektion, mit den folgenden Schritten:

   - Erzeugen von moduliertem Laserlicht in zwei Laserstrahlen (3, 4) identischer Wellenlänge, wobei das Laserlicht von einer gemeinsamen Laserlichtquelle (2) ausgesendet wird;
   - Hindurchleiten eines der Laserstrahlen (3, 4) als Analyselaserstrahl (3) durch das zu analysierende Gas oder Gasgemisch (6), das das Laserlicht des Analyselaserstrahls (3) in Abhängigkeit von seiner Wellenlänge zumindest teilweise absorbiert;
   - Hindurchleiten des anderen Laserstrahls (4, 3) als Referenzlaserstrahl (4) durch ein bekanntes Gas oder Gasgemisch (8), das das Laserlicht des Referenzlaserstrahls (4) nicht absorbiert;
   - Erfassen des Analyselaserstrahls (3) mit einem Analysemessdetektor (7) und des Referenzlaserstrahls (4) mit einem Referenzmessdetektor (9) nach dem Durchtritt durch das jeweilige Gas bzw. Gasgemisch (6, 8);
   - Demodulieren des Analysemessdetektorsignals und des Referenzmessdetektorsignals und anpassen der Signale aneinander; und
   - Eliminieren des durch Selfmixing-Effekte bedingten Rauschens des demodulierten Analysemessdetektorsignals durch Differenzbildung der demodulierten aneinander angepassten Ausgangssignale des Analysemessdetektors (7) und des Referenzmessdetektors (9);
   wobei mit der Laserlichtquelle (2) mit der Frequenz f moduliertes Laserlicht erzeugt wird und bei der Differenzbildung das nf-Signal des Analysemessdetektors (7) und des Referenzmessdetektors (9) verwendet wird, wobei n eine positive ganze Zahl ist.

**2.** Verfahren nach Anspruch 1, **dadurch gekennzeichnet, dass** mit der Laserlichtquelle (2) mit der Frequenz f moduliertes Laserlicht erzeugt wird und bei der Differenzbildung ein 2f-Signal des Analysemessdetektors (7) und des Referenzmessdetektors (9) verwendet wird.

**3.** Verfahren nach Anspruch 1 oder 2, **dadurch gekennzeichnet, dass** die Wellenlänge des Laserlichtes der Laserlichtquelle (2) kontinuierlich verändert wird.

**4.** Verfahren nach einem der vorstehenden Ansprüche, **dadurch gekennzeichnet, dass** für die Differenzbildung des demodulierten Analysemessdetektorsignals und des demodulierten Referenzmessdetektorsignals, die Ausgangssignale des Analysemessdetektors (7) und des Referenzmessdetektors (9) in der Amplitude aneinander angepasst werden.

**5.** Verfahren nach Anspruch 4, **dadurch gekennzeichnet, dass** für die Signalstärkenanpassung der jeweiligen nf-Signale das Verhältnis der Gleichstromanteile verwendet wird.

**6.** Verfahren nach Anspruch 4 oder 5, **dadurch gekennzeichnet, dass** die Ausgangssignale des Analysemessdetektors (7) und des Referenzmessdetektors (9) zusätzlich in der Phase aneinander angepasst werden.

**7.** Verfahren nach einem der vorstehenden Ansprüche, **dadurch gekennzeichnet, dass** als Analyselaserstrahl (3) der Primärstrahl und als Referenzlaserstrahl (4) der Sekundärstrahl einer Laserlichtquelle (2) verwendet wird, die aus sich gegenüber liegenden Laseraperturen der Laserkavität austreten.

**8.** Verfahren nach einem der vorstehenden Ansprüche, **dadurch gekennzeichnet, dass** der Analyselaserstrahl (3) und der Referenzlaserstrahl (4) durch Teilung des von der Laserlichtquelle (2) ausgehenden Laserstrahls gewonnen werden.

**9.** Verfahren nach einem der vorstehenden Ansprüche, **dadurch gekennzeichnet, dass** der Analyselaserstrahl (3) von dem von der Laserlichtquelle (2) ausgehenden Laserstrahl gebildet und für die Bildung des Referenzlaserstrahls (4) Streulicht des Laserstrahls verwendet wird.

**10.** Verfahren nach einem der vorstehenden Ansprüche, **dadurch gekennzeichnet, dass** zur Intensitätsbestimmung der Laserlichtquelle (2) der Gleichstromlevel des Analysemessdetektors (7) und des Referenzmessdetektors (9) verwendet werden.

**11.** Verfahren nach einem der vorstehenden Ansprüche, **dadurch gekennzeichnet, dass** das Selfmixing-korrigierte Signal $S_{2f}(x)$ berechnet wird über

$$S_{2f,SM,norm}(x) = S_{2f,norm}(x) - R_{2f,norm}(x) = \frac{S_{2f}(x)}{S_0} - \frac{R_{2f}(x)}{R_0}$$

$$S'_{2f,SM,norm}(x) = \frac{S_{2f}(x) - b \cdot R_{2f}(x)}{R_0} \quad \text{mit} \quad b = \frac{S_0}{R_0}$$

**12.** Verfahren nach einem der vorstehenden Ansprüche, **dadurch gekennzeichnet, dass** das Selfmixing korrigierte Signal $S_{2f}(x)$ berechnet wird über

$$S_{2f,SM,norm}(x) = S_{2f,norm}(x) + R_{2f,norm}(x) = \frac{S_{2f}(x)}{S_0} + \frac{R_{2f}(x)}{R_0}$$

$$S'_{2f,SM,norm}(x) = \frac{S_{2f}(x) + b \cdot R_{2f}(x)}{R_0} \quad \text{mit} \quad b = \frac{S_0}{R_0}$$

**13.** Verfahren nach einem der vorstehenden Ansprüche, **dadurch gekennzeichnet, dass** das Selfmixing korrigierte Signal $S_{2f}(x)$ berechnet wird über

$$S_{2f,SM,norm}(x) = \frac{S_{2f}(x)}{S_0} - a(x) \cdot \frac{R_{2f}(x)}{R_0}$$

$$S'_{2f,SM,norm}(x) = \frac{S_{2f}(x) + b \cdot a(x) \cdot R_{2f}(x)}{R_0} \quad \text{mit} \quad b = \frac{S_0}{R_0}$$

wobei a(x) eine durch Messung bestimmte Signalstärkenanpassung über den Modulationsbereich x darstellt.

**14.** Verfahren nach einem der vorstehenden Ansprüche, **dadurch gekennzeichnet, dass** das Selfmixing korrigierte Signal $S_{2f}(x)$ berechnet wird über

$$S_{2f,SM,norm}(x) = \frac{S_{2f}(x)}{S_0} - a(x) \cdot \frac{R_{2f}(x)}{R_0}$$

$$S'_{2f,SM,norm}(x) = \frac{S_{2f}(x) + b \cdot a(x) \cdot R_{2f}(x)}{R_0} \quad \text{mit} \quad b = \frac{S_0}{R_0}$$

wobei a(x) eine Signalstärkenanpassung über den Modulationsbereich x darstellt, die durch Interpolation, vorzugsweise lineare Interpolation, zwischen gemessenen Anpassungsfaktoren am Anfang und Ende des Modulationsbereichs x ermittelt wird.

**15.** Messanordnung zur Durchführung des Verfahrens zur Wellenlängenmodulationsspektroskopie nach einem der Ansprüche 1 - 14, vorzugsweise zur Anwendung bei der Gasdetektion, wobei die Messanordnung (1) eine vorzugsweise abstimmbare Laserlichtquelle (2) zur Erzeugung von moduliertem Laserlicht in zwei Laserstrahlen (3, 4) als Analyselaserstrahl (3) und als Referenzlaserstrahl (4), einen Analysemessdetektor (7) sowie einen Referenzmessdetektor (9) zur Erfassung des Analyselaserstrahls (3) bzw. des Referenzlaserstrahls (4) aufweist, und mit einer Steuer- und Auswerteeinheit (10) für die Steuerung der Laserlichtquelle (2) und für die Auswertung des Analysemessdetektorsignals und des Referenzmessdetektorsignals, wobei vor der Erfassung der Analyselaserstrahl (3) ein Messvolumen (5) mit einem zu analysierenden Gas oder Gasgemisch (6) und der Referenzlaserstrahl (4) ein bekanntes Gas oder Gasgemisch (8) passiert.

Fig. 1

Fig. 2

a

b

Fig. 3

$$\frac{m_{Analyse}}{m_{Referenz}}$$

$$\left.\frac{m_{Analyse}}{m_{Referenz}}\right|_{Anfang}$$

$$I_{dc}$$

$$\left.\frac{m_{Analyse}}{m_{Referenz}}\right|_{Ende}$$

**Fig. 4**

13

EP 2 455 733 A1

Europäisches
Patentamt
European
Patent Office
Office européen
des brevets

**EUROPÄISCHER RECHERCHENBERICHT**

Nummer der Anmeldung

EP 10 01 4737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MASIYANO D ET AL: "Self-mixing interference effects in tunable diode laser absorption spectroscopy", APPLIED PHYSICS B ; LASERS AND OPTICS, SPRINGER, BERLIN, DE, Bd. 96, Nr. 4, 6. August 2009 (2009-08-06), Seiten 863-874, XP019739165, ISSN: 1432-0649, DOI: DOI:10.1007/S00340-009-3690-X * Seite 871; Abbildungen 14-16 * | 1-15 | INV. G01J3/433 |
| X | US 6 040 914 A (BORTZ MICHAEL L [US] ET AL) 21. März 2000 (2000-03-21) * Zusammenfassung; Abbildung 1 * | 1,15 | |
| X | WO 2005/005940 A1 (DELTA SEARCH LABS INC [US]; SAPTARI VIDI A [US]; YOUCEF-TOUMI KAMAL [U) 20. Januar 2005 (2005-01-20) * Seite 6, Zeile 20 - Seite 7, Zeile 17; Abbildung 1 * | 1,15 | |

RECHERCHIERTE SACHGEBIETE (IPC)

G01J

Der vorliegende Recherchenbericht wurde für alle Patentansprüche erstellt

| Recherchenort | Abschlußdatum der Recherche | Prüfer |
|---|---|---|
| München | 12. April 2011 | Schmidt, Charlotte |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

14

**ANHANG ZUM EUROPÄISCHEN RECHERCHENBERICHT
ÜBER DIE EUROPÄISCHE PATENTANMELDUNG NR.**

EP 10 01 4737

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2011

| Im Recherchenbericht angeführtes Patentdokument | Datum der Veröffentlichung | Mitglied(er) der Patentfamilie | Datum der Veröffentlichung |
|---|---|---|---|
| US 6040914 A | 21-03-2000 | KEINE | |
| WO 2005005940 A1 | 20-01-2005 | US 2005012925 A1 | 20-01-2005 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6040914 A